# EUROPEAN PATENT APPLICATION

(11) **EP 3 930 038 A1**
(43) Date of publication of application: **29.12.2021**
(21) Application number: 19916472.4
(22) Date of filing: 29.11.2019
(51) Int. Cl.: H01M 4/13, H01M 4/131, H01M 4/139, H01M 4/1391

(54) **NON-AQUEOUS ELECTROLYTE SECONDARY BATTERY, AND METHOD FOR MANUFACTURING POSITIVE ELECTRODE PLATE USED THEREIN**

(30) Priority: 19.02.2019 JP 2019027821
(71) Applicant: SANYO Electric Co., Ltd., Daito-shi Osaka 574-8534 (JP)
(72) Inventor: NISHIDA, Akira, Osaka-shi, Osaka 540-6207 (JP); MAGARI, Yoshifumi, Osaka-shi, Osaka 540-6207 (JP); AKO, Atsutoshi, Osaka-shi, Osaka 540-6207 (JP); IKEDA, Daisuke, Osaka-shi, Osaka 540-6207 (JP)
(74) Representative: Vigand, Philippe
(86) International application number: PCT/JP2019/046731
(87) International publication number: WO 2020/170543

(57) **Abstract**

Disclosed is a method for manufacturing a positive electrode plate, wherein even when a positive electrode mix layer is densely compressed, the positive electrode plate is prevented from being so greatly bent that wrinkles created in non-coated regions during transport, winding, or lamination develop into deep winkles or cracks, thus avoiding the inability to transport or wind the positive electrode plate. This manufacturing method can provide a positive electrode plate having a positive electrode mix layer formed on the surface thereof, wherein the filling density of the positive electrode mix layer is at least 3.4 g/cm³, and the warpage amount h of the positive electrode plate in the width direction perpendicular to the longitudinal direction satisfies 0.0 ≤ h ≤ 3.0 mm per 1 m in the longitudinal direction.

## Description

### TECHNICAL FIELD

The present disclosure generally relates to a non-aqueous electrolyte secondary battery, and a method for manufacturing a positive electrode plate used therein.

### BACKGROUND ART

A non-aqueous electrolyte secondary battery is manufactured by using a positive electrode plate and a negative electrode plate, in each of which a mixture layer is formed by coating a surface of a base material composed of a long band-shaped metal foil with a mixture including an active material, along a longitudinal direction. The positive electrode plate and the negative electrode plate that are manufactured in this way are cut into appropriate lengths according to a shape of an electrode assembly. In order to manufacture a high-capacity non-aqueous electrolyte secondary battery, a large amount of active material is packed in an exterior body having a limited internal volume. Therefore, the thicknesses of the base materials for the positive electrode plate and the negative electrode plate are thin, and it is required to increase the packing density of the mixture layers formed on the base materials.

Thus, in order to obtain a positive electrode plate and a negative electrode plate that are highly packed, the mixture layers formed on the base materials are compressed by a press roll or the like.

Conventionally, Patent Literature 1 has disclosed an electrode manufacturing device for battery. The electrode manufacturing device includes a press section that compresses an electrode sheet having a coated region where a surface of a band-shaped base material is coated with an electrode layer along a longitudinal direction, and a non-coated region that is not coated with the electrode layer, and a curve straightening section that straightens a curve that is generated in the non-coated region of the electrode sheet at a downstream side in a sheet transport direction, of the press section. In the curve straightening section, a curve straightening roll having a small diameter portion and a large diameter portion along a width direction of the electrode sheet is disposed so that the small diameter portion faces the coated region of the electrode sheet, and the large diameter portion faces the non-coated region of the electrode sheet. It is indicated that thereby, the non-coated region of the electrode sheet is caused to abut on the large diameter portion of the curve straightening roll to apply tension to the non-coated region of the electrode sheet, and thereby curve of the non-coated region of the electrode sheet is straightened.

Further, Patent Literature 2 discloses a wrinkle removing device for a battery electrode plate. The wrinkle removing devices are provided respectively on an electrode plate supply side and an electrode plate discharge side of a rolling machine that rolls the battery electrode plate. Each of the wrinkle removing devices comprises a pressing roller pair, a dancer roller, a help roller, and a tension roller in order from a far side to the rolling machine. The pressing roller pair is constituted of a roller pair that are a speed control roller rotationally driven by a servo drive motor and a pressing roller with an outer peripheral surface composed of a rubber, which are in pressure contact with each other. It is indicated that the wrinkle removing device removes wrinkles generated in the non-coated region of the battery electrode plate by rolling by the rolling machine by applying tension to the battery electrode plate passing through the wrinkle removing device by controlling the rotational speed of the speed control roller of the pressing roller pair.

### CITATION LIST

### PATENT LITERATURE

PATENT LITERATURE 1: Japanese Unexamined Patent Application Publication No. 2015-90805
PATENT LITERATURE 2: Chinese Utility Model Laid-open publication No. 207381475

### SUMMARY

### TECHNICAL PROBLEM

In the technology of Patent Literature 1, the coated region is greatly elongated in the longitudinal direction by the load due to compression when the positive electrode mixture layer that is the electrode layer is compressed particularly to a high density of 3.4 g/cm³ in the positive electrode plate constituting the electrode assembly of the non-aqueous electrolyte secondary battery, and therefore the positive electrode plate greatly curves before entering the curve straightening roll. Therefore, wrinkles generated in the non-coated region and it is sometimes impossible to transport and wind the positive electrode plate at the time of transport from the press section to the curve straightening roll, and at the time of entry to the curve straightening roll.

Further, in the technology of Patent Literature 2, the coated region is greatly elongated in the longitudinal direction by the load due to compression when the positive electrode mixture layer is compressed particularly to a high density of 3.4 g/cm³ or more, so that even if tension is applied to elongate the non-coated region while transporting the positive electrode plate with the cylindrical rollers before and after the compression step, it is not possible to eliminate a difference between the respective elongation percentages occurring to the coated region and the non-coated region. Accordingly, it is not possible to suppress curving of the positive electrode plate in the longitudinal direction and the width direction and generation of wrinkles, and deep wrinkles and cracks develop in the process of transport, winding and laminating, and transport, winding and laminating sometimes become impossible.

It is an advantage of the present disclosure to provide a non-aqueous electrolyte secondary battery that can prevent wrinkles generated in a non-coated region during transport and winding due to a positive electrode plate greatly curving from developing into deep wrinkles and cracks and making transport, winding and laminating impossible even when the positive electrode plate is compressed to high density, and a method for manufacturing the positive electrode plate used therein.

### SOLUTION TO PROBLEM

A non-aqueous electrolyte secondary battery that is one aspect of the present disclosure is a non-aqueous electrolyte secondary battery comprising an electrode assembly constructed by causing a positive electrode plate and a negative electrode plate to face each other via a separator, wherein the positive electrode plate includes a positive electrode mixture layer formed on a surface, a packing density of the positive electrode mixture layer is 3.4 g/cm³ or more, and a warpage amount h in a width direction orthogonal to a longitudinal direction is 0.0 ≤ h ≤ 3.0 mm per 1 m in the longitudinal direction of the positive electrode plate.

Further, a method for manufacturing a positive electrode plate used in a non-aqueous electrolyte secondary battery that is one aspect of the present disclosure is a method for manufacturing a positive electrode plate used in a non-aqueous electrolyte secondary battery, in which a positive electrode mixture layer by coating a surface of a long band-shaped metal base material with a mixture including a positive electrode active material along a longitudinal direction, and a non-coated region that is not coated with the positive electrode mixture are continuously formed, and includes a compression step of compressing the positive electrode mixture layer of the positive electrode plate, an upstream tension giving step of giving tension to the positive electrode plate in an interval between the compression step and two rolls, by sandwiching and passing the positive electrode plate between the two rolls, before the compression step, a first elongation step of elongating a metal base material portion corresponding to the non-coated region where the positive electrode mixture layer is not formed in the positive electrode plate in an interval of the upstream tension giving step, a downstream tension giving step of giving tension to the positive electrode plate in an interval between the compression step and two rolls by sandwiching and passing the positive electrode plate between the two rolls, after the compression step, and a second elongation step of elongating the metal base material portion corresponding to the non-coated region, in an interval of the downstream tension giving step, wherein in the first and second elongation steps, the metal base material portion is elongated by causing a large diameter portion of a straightening roll including the large diameter portion and a small diameter portion along a width direction orthogonal to a longitudinal direction of the positive electrode plate to abut on the metal base material portion corresponding to the non-coated region, and applying tension to the metal base material portion.

### ADVANTAGEOUS EFFECT OF INVENTION

According to the non-aqueous electrolyte secondary battery and a method for manufacturing the positive electrode plate used therein according to the present disclosure, it is possible to prevent wrinkles generated in the non-coated region during transport and winding due to the positive electrode plate greatly curving from developing into deep wrinkles and cracks and making transport, winding, and lamination impossible even when the positive electrode plate is compressed to high density.

### BRIEF DESCRIPTION OF DRAWING

[FIG. 1A] (a) is a partial plan view of a positive electrode plate that is one embodiment, and (b) is a sectional view in a width direction of the positive electrode plate.
[FIG. 1B] FIG. 1B is a partial plan view illustrating a modified example of the positive electrode plate.
[FIG. 2] FIG. 2 is a view illustrating a state where the positive electrode plate greatly curves after compression of a positive electrode mixture layer.
[FIG. 3] FIG. 3 is a plan view illustrating a state where the positive electrode plate warps in a width direction.
[FIG. 4] FIG. 4 is a view illustrating an elongation percentage in the positive electrode plate.
[FIG. 5] FIG. 5 is a view illustrating a positive electrode plate compression device for carrying out a method for manufacturing the positive electrode plate of one embodiment.
[FIG. 6] (a) is a view illustrating a state where a straightening roll abuts on the positive electrode plate illustrated in FIG. 1A, and (b) is a view illustrating a state where the straightening roll abuts on the positive electrode plate illustrated in FIG. 1B.

### DESCRIPTION OF EMBODIMENTS

Hereinafter, an embodiment according to the present disclosure will be described in detail with reference to the accompanying drawings. In the explanation, specific shapes, materials, numerical values, directions and the like are for illustration to facilitate understanding of the present disclosure, and can be properly changed according to an application, purpose and specifications. Further, when a plurality of embodiments and modified examples are included hereinafter, it has been assumed from the beginning that these characteristic parts are used in appropriate combinations.

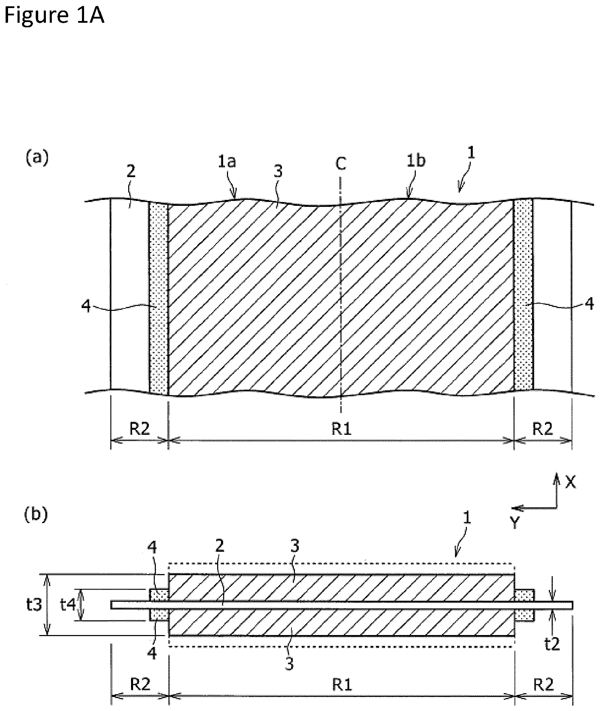

FIG. 1A (a) is a partial plan view of a positive electrode plate 1 that is one embodiment, and FIG. 1A (b) is a sectional view in a width direction of the positive electrode plate 1. In FIG. 1A, a longitudinal direction of the positive electrode plate 1 is shown by an arrow X, and a width direction orthogonal to the longitudinal direction is shown by an arrow Y.

The positive electrode plate 1 is cut into an appropriate length when an electrode assembly is produced, and is wound in a cylindrical shape, or elliptical shape or track shape in section with a negative electrode plate via a separator, and thereby can constitute a wound electrode assembly. Alternatively, it is possible to constitute a laminated electrode assembly that is constructed by alternately laminating a plurality of the positive electrode plates 1 and negative electrode plates via separators. A non-aqueous electrolyte secondary battery is constructed by storing the wound electrode assembly or laminated electrode assembly in a battery case with an electrolyte in a hermetically sealed state.

As illustrated in FIG. 1A (a) and (b), the positive electrode plate 1 comprises a metal base material 2 formed into a long band shape, and a positive electrode mixture layer 3 formed on surfaces on both sides of the metal base material 2. The metal base material 2 is preferably constituted of a web of an aluminum alloy, for example. A thickness t2 of the metal base material 2 is, for example, 13 µm, but may be 5 to 30 µm. The positive electrode plate 1 may be formed to be divided into two positive electrode plates 1a and 1b by being cut along a center line C in the width direction.

The positive electrode mixture layer 3 is formed in a center portion in a width direction of the metal base material 2. The positive electrode mixture layer 3 is formed by coating the surface of the metal base material 2 with a positive electrode mixture including a positive electrode active material. On end edge portions of both sides in the width direction of the metal base material 2, regions that are not coated with the positive electrode mixture layer 3 are formed. Hereinafter, in the positive electrode plate 1, a region where the positive electrode mixture layer 3 is formed will be referred to as a coated region R1, and a region where the positive electrode mixture layer 3 is not formed will be referred to as a non-coated region R2.

The positive electrode mixture layer 3 includes a positive electrode active material. The positive electrode active material includes Ni, Co, and Li, and includes at least one of Mn and Al. Further, in the positive electrode active material, a ratio of Ni to a total number of moles of metal elements excluding Li is preferably 30 mol% or more. By making the ratio of Ni being 30 mol% or more, it is possible to compress the positive electrode mixture layer 3 to high density to increase battery capacity.

Ni-containing composite oxide particles that function as the positive electrode active material are composite oxide particles represented by, for example, the general formula: LiₓNi_{1-y-z}Co_{y}M_{z}O₂, where 0.9 ≤ x ≤ 1.2, 0 < y + z < 0.5, and M is at least one metal element including at least one element of the group consisting of Al and Mn. In the above-described general formula, 0.05 ≤ y + z ≤ 0.2 is preferably established. The Ni-containing composite oxide particles may include other metal elements and the like than Li, Ni, Co, Al, and Mn. As the other metal elements and the like, Na, Mg, Sc, Zr, Ti, V, Ga, In, Ta, W, Sr, Y, Fe, Cu, Zn, Cr, Pb, Sb, B and the like are cited.

In the positive electrode plate 1, in the non-coated region R2, a protection layer 4 may be provided adjacently to the positive electrode mixture layer 3 in the coated region R1. The protection layer 4 extends in a band shape along the longitudinal direction X of the metal base material 2. The protection layer 4 has a function of preventing the negative electrode from short-circuiting with a metal base material portion constituting the non-coated region R2 of the positive electrode plate 1 when the positive electrode plate 1 constitutes an electrode assembly facing a negative electrode plate via a separator. The protection layer 4 includes inorganic material particles of ceramics or the like, a resin binder and the like, for example. A thickness t4 of the protection layers 4 formed on both surfaces of the metal base material 2 is 70 µm, for example. In the present embodiment, the non-coated region R2 of the positive electrode plate 1 includes the metal base material portion on which the protection layers 4 are formed. Note that in the present embodiment, the protection layer 4 is not an essential constituent, and may be omitted.

The positive electrode plate 1 has the positive electrode mixture layer 3 compressed by passing between a pair of press rolls as described later. Specifically, for example, a thickness t3 of the positive electrode mixture layers 3 formed on both the surfaces of the metal base material 2 is compressed to, for example, 140 µm after compression from, for example, 180 µm before compression. The thickness t3 of the positive electrode mixture layers 3 here also includes the thickness t2 of the metal base material 2. By compressing the positive electrode mixture layer 3 in this way, it is possible to achieve a packing density of 3.4 g/cm³ or more, for example.

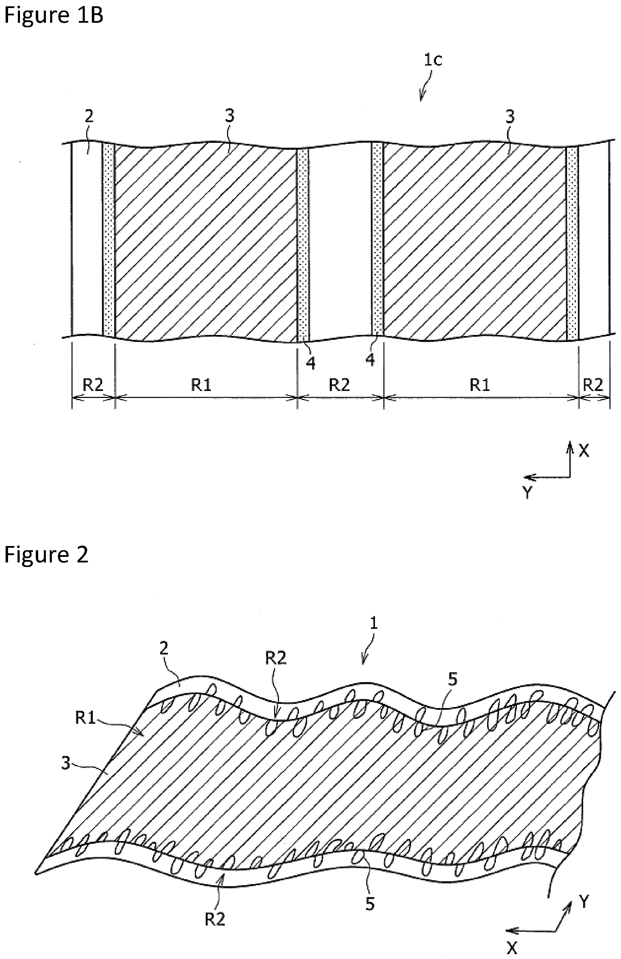

Note that in FIG. 1A, the example is explained, in which the band-shaped positive electrode mixture layer 3 is formed in one row with the non-coated region R2 left in end edge portions on both sides in the width direction of the metal base material 2, but the present disclosure is not limited to this. For example, as a positive electrode plate 1c illustrated in FIG. 1B, two rows of the band-shaped positive electrode mixture layers 3 may be formed in stripe shapes on the metal base material 2 at an interval, and the non-coated region R2 may also be formed in a center portion in the width direction in addition to the end edge portions on both the sides in the width direction of the metal base material 2.

FIG. 2 is a view illustrating a state where the positive electrode plate 1 greatly curves after compression of the positive electrode mixture layer 3. When the positive electrode mixture layer 3 is compressed by passing between the pair of press rolls, the coated region R1 is rolled in the positive electrode plate 1, and thereby is elongated in the longitudinal direction X. In contrast with this, the thickness t2 of the metal base material 2 constituting the non-coated region R2 of the positive electrode plate 1 is thinner than the thickness t3 of the positive electrode mixture layer 3 after compression, so that the metal base material 2 is not rolled by the pair of press rolls, and is not elongated in the longitudinal direction X. Accordingly, an elongation amount in the longitudinal direction X differs between the coated region R1 and the non-coated region R2. The positive electrode plate 1 passing through a compression step of the positive electrode mixture layer 3 has a curved shape that is wavy in the longitudinal direction X as illustrated in FIG. 2. Further, in a vicinity of a boundary between the coated region R1 and the non-coated region R2, a number of wrinkles 5 extensively existing in the width direction Y are formed to line up in the longitudinal direction X by a residual stress generated in the metal base material 2. When the curves and a number of wrinkles 5 in the longitudinal direction X like them are generated, deep wrinkles and cracks develop in the process of transport, winding and laminating of the positive electrode plate 1 after compression treatment, and transport, winding, and laminating sometimes become impossible.

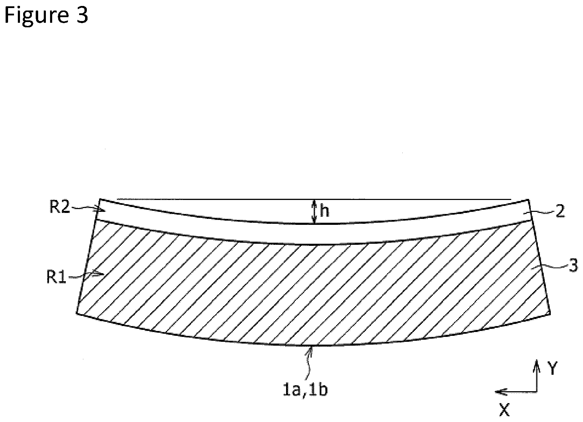

Further, when the positive electrode plate 1 illustrated in FIG. 2 is cut in the center position in the width direction to form positive electrode plates 1a and 1b separately, the elongation amount of the coated region R1 is larger than the elongation amount of the non-coated region R2, so that the positive electrode plates 1a and 1b may warp in an almost C shape, as illustrated in FIG. 3. At this time, a maximum warpage amount in the width direction X per 1 m in the longitudinal direction X of the positive electrode plates 1a and 1b is assumed to be "h". When the warpage amount h increases, wrinkles are also generated when the positive electrode plates 1a and 1b are wound to constitute a wound electrode assembly to be a cause of a short-circuit with the negative electrode plate.

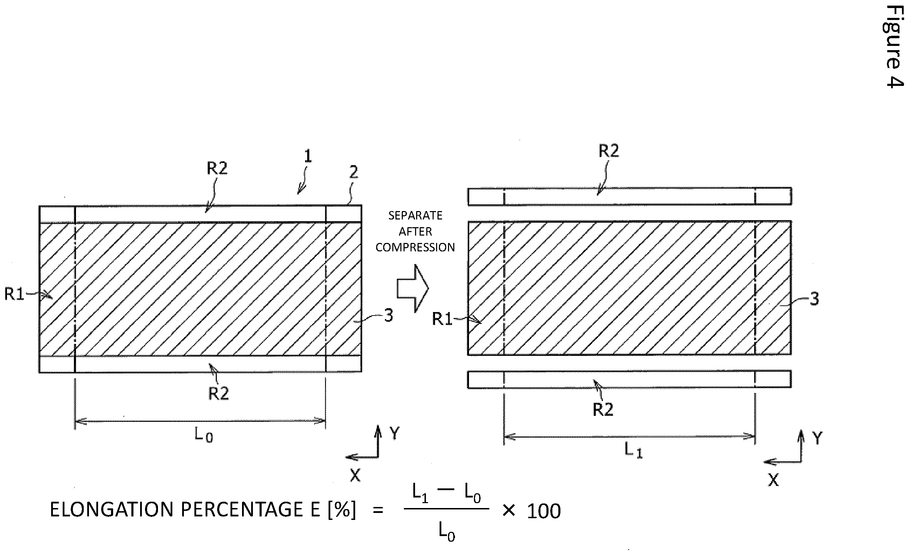

FIG. 4 is a view illustrating an elongation percentage in the positive electrode plate 1. As illustrated in FIG. 4, before compressing the positive electrode mixture layer 3, lines are ruled on the positive electrode plate 1 at predetermined intervals L0 in the longitudinal direction X, the coated region R1 and the non-coated region R2 are separated after the compression treatment of the positive electrode mixture layer 3 is performed, and lengths L1 in the longitudinal direction X are respectively measured. Subsequently, respective elongation percentages E1 and E2 of the coated region R1 and the non-coated region R2 can be calculated by formula: E (%) = (L1 - L0) / L0 × 100. As a difference ΔL between the elongation percentage E1 of the coated region R1 and the elongation percentage E2 of the non-coated region R2 that are calculated in this way is smaller, generation of the curves and the wrinkles 5 in the longitudinal direction X in the positive electrode plate 1, and the warpage amounts h in the positive electrode plates 1a and 1b can be suppressed to be smaller.

Thus, in the positive electrode plates 1, 1a and 1b of the present embodiment, the packing density of the positive electrode mixture layer 3 is 3.4 g/cm³ or more, and the warpage amount h in the width direction X orthogonal to the longitudinal direction X is 0.0 ≤ h ≤ 3.0 mm per 1 m in the longitudinal direction of the positive electrode plates 1a and 1b. Further, in this case, the difference ΔL between the respective elongation percentages in the longitudinal direction X of the coated region R1 and the non-coated region R2 by the compression treatment and the elongation treatment at the time of manufacture of the positive electrode plate 1 is preferably 0 ≤ ΔL ≤ 0.3%. By adopting the warpage amount h and the elongation percentage difference ΔL like them, it is possible to prevent wrinkles that are generated in the non-coated region during transport, and during winding and laminating by the positive electrode plate 1 greatly curving from developing into deep wrinkles and cracks and making transport, winding and laminating impossible even when the positive electrode plate 1 is compressed to a high density.

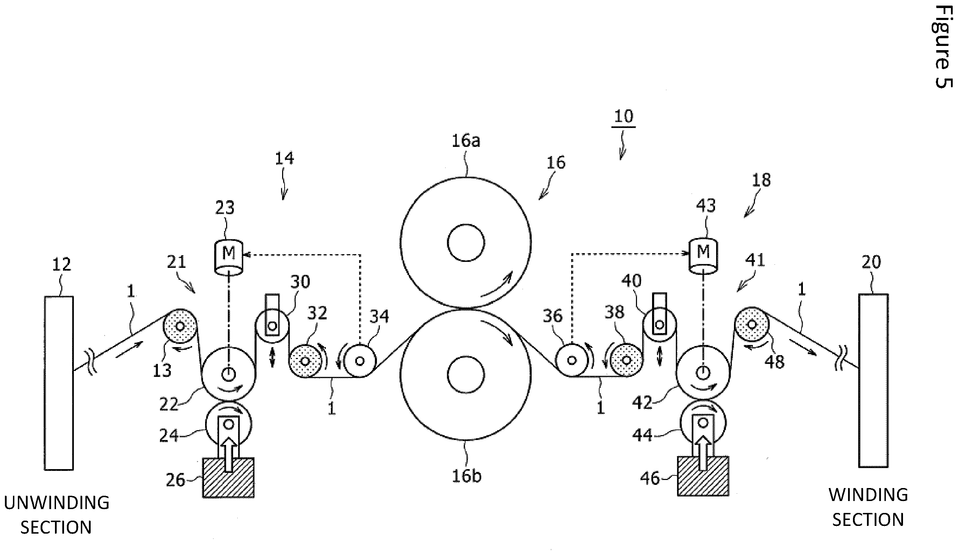

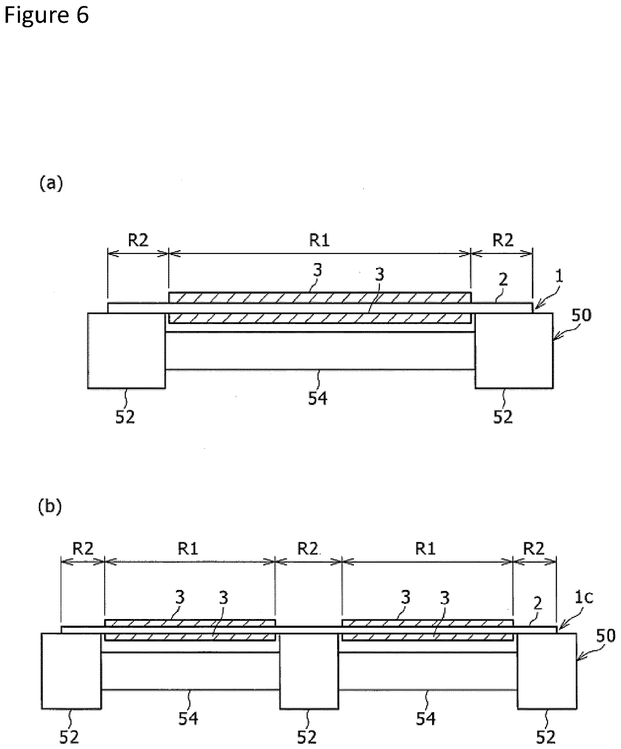

Next, with reference to FIG. 5 and FIG. 6, a method for manufacturing the positive electrode plate 1 that realizes the warpage amount h and the elongation percentage difference ΔL as described above will be described. FIG. 5 is a view illustrating a positive electrode plate compression device 10 for carrying out the method for manufacturing the positive electrode plate 1 of one embodiment. FIG. 6 (a) is a view illustrating a state where a straightening roll abuts on the positive electrode plate 1 illustrated in FIG. 1A, and FIG. 6 (b) is a view illustrating a state where a straightening roll abuts on the positive electrode plate 1c illustrated in FIG. 1B.

As illustrated in FIG. 5, the positive electrode plate compression device 10 comprises an unwinding section 12, an upstream side elongation section 14, a press section 16, a downstream side elongation section 18, and a winding section 20. In FIG. 5, the positive electrode plate 1 is transported from a left side to a right side from the unwinding section 12 to the winding section 20.

The unwinding section 12 is a device that continuously unwinds the positive electrode plate 1 from the roll on which the positive electrode plate 1 before compressed is wound. The positive electrode plate 1 that is unwound from the unwinding section 12 is wound around an upper outer peripheral surface of a rotating cylindrical pass roll 13 to change the transport direction, and is introduced into the upstream side elongation section 14.

The upstream side elongation section 14 has a carry-in section 21, a dancer roll 30, a pass roll 32 and a tension sensor roll 34. The carry-in section 21 has a function of performing tension control of the positive electrode plate 1 located between the carry-in section 21 and the press section 16 by adjusting a transport speed of the positive electrode plate 1 transported from the unwinding section 12.

The carry-in section 21 includes a speed control roll 22 that is metallic and cylindrical, and a nip roll 24 that is pressed in contact with the speed control roll 22 from below. An outer peripheral surface of the nip roll 24 is formed from a material that is flexible and non-slip such as a rubber, for example. The nip roll 24 is pressed in contact with the speed control roll 22 by a pressing force by a pressing device 26.

On the other hand, the speed control roll 22 is connected to a motor 23 constituted of a servo motor or the like, for example, and is rotationally driven, and a rotational speed is controlled. The positive electrode plate 1 transported from the unwinding section 12 is continuously transported in a state sandwiched between the speed control roll 22 and the nip roll 24 in the carry-in section 21. At this time, the positive electrode plate 1 is in a state where tension is cut off concerning front-back in the transport direction by being sandwiched between the speed control roll 22 and the nip roll 24, and a tension fluctuation between the unwinding section 12 and the carry-in section 21 does not affect tension control between the carry-in section 21 and the press section 16. In this meaning, the carry-in section 21 constitutes an upstream side tension cutoff section.

The positive electrode plate 1 that exits the carry-in section 21 is wound around on an upper outer peripheral surface of the dancer roll 30 over a half circumference by changing the transport direction vertically upward, and is transported vertically downward. The dancer roll 30 is connected to a raising and lowering mechanism not illustrated, and is movable in an up-down direction. The dancer roll 30 moves up and down, and thereby the positive electrode plate 1 located between the carry-in section 21 and the press section 16 is kept in a state where the positive electrode plate 1 is stretched with a predetermined tension without slack.

The pass roll 32 supports the positive electrode plate 1 transported vertically downward from the dancer roll 30 in a state where the positive electrode plate 1 is wound around 1/4 of a lower outer peripheral surface, and thereby the transport direction of the positive electrode plate 1 is changed to a horizontal direction.

A tension sensor roll 34 disposed at a downstream side of the pass roll 32 supports the positive electrode plate 1 in a state where a part of a lower outer peripheral surface thereof is pressed against the positive electrode plate 1 while rotating, and in this state, detects tension of the positive electrode plate 1 that is continuously transported, by a tension sensor (not illustrated) provided in the tension sensor roll 34. A result of the detected tension is transmitted to the motor 23 that drives the speed control roll 22, and the rotational speed of the speed control roll 22 is controlled based on this, whereby the tension of the positive electrode plate 1 in the upstream side elongation section 14 is kept at a predetermined value.

The press section 16 includes a pair of press rolls 16a and 16b that closely face each other. The positive electrode plate 1 transported from the upstream side elongation section 14 is compressed when passing between the pair of press rolls 16a and 16b so that the positive electrode mixture layer 3 has a packing density of 3.4 g/cm³ or more.

The downstream side elongation section 18 has a tension sensor roll 36, a pass roll 38, a dancer roll 40, and a carrying-out section 41 in order along the transport direction of the positive electrode plate 1.

The tension sensor roll 36 disposed at a downstream side of the press section 16 supports the positive electrode plate 1 in a state where a part of a lower outer peripheral surface thereof is pressed against the positive electrode plate 1 while rotating, and in this state, detects tension of the positive electrode plate 1 that is continuously transported, by a tension sensor (not illustrated) provided in the tension sensor roll 36. A result of the detected tension is transmitted to a motor 43 such as a servo motor, for example, that drives a speed control roll 42 of the carrying-out section 41, and a rotational speed of the speed control roll 42 is controlled based on this, whereby the tension of the positive electrode plate 1 in the downstream side elongation section 18 is kept at a predetermined value.

The pass roll 38 supports the positive electrode plate 1 transported in a horizontal direction from the tension sensor roll 36 while rotating in a state where the positive electrode plate 1 is wound around 1/4 of a lower outer peripheral surface, and thereby the transport direction of the positive electrode plate 1 is changed to a vertically upward.

The positive electrode plate 1 transported vertically upward from the pass roll 38 is wound around on an upper outer peripheral surface of the dancer roll 40 over a half circumference and transported vertically downward. The dancer roll 40 is connected to a raising and lowering mechanism not illustrated, and is movable in the up-down direction. The dancer roll 40 moves up and down, and thereby the positive electrode plate 1 located between the press section 16 and the carrying-out section 41 is kept in a state where the positive electrode plate 1 is stretched with a predetermined tension without slack.

The carrying-out section 41 has a function of performing tension control of the positive electrode plate 1 located between the press section 16 and the carrying-out section 41 by adjusting the transport speed of the positive electrode plate 1 in the downstream side elongation section 18.

The carrying-out section 41 includes the speed control roll 42 that is metallic and cylindrical, and a nip roll 44 that is pressed in contact with the speed control roll 42 from below. An outer peripheral surface of the nip roll 44 is formed of a material that is flexible and non-slip such as a rubber, for example. The nip roll 44 pressed in contact with the speed control roll 42 by a pressing force by a pressing device 46.

On the other hand, the speed control roll 42 is connected to the motor 43 constituted of a servo motor or the like, for example, and is rotationally driven, and a rotational speed is controlled. The positive electrode plate 1 transported from the dancer roll 40 is continuously transported in a state sandwiched between the speed control roll 42 and the nip roll 44 in the carrying-out section 41. At this time, the positive electrode plate 1 is in a state where tension is cut off concerning front-back in the transport direction by being sandwiched between the speed control roll 42 and the nip roll 44, and a tension fluctuation between the carrying-out section 41 and the winding section 20 does not affect tension control between the press section 16 and the carrying-out section 41. In this meaning, the carrying-out section 41 constitutes a downstream side tension cutoff section.

The positive electrode plate 1 that exits the carrying-out section 41 is wound around an upper outer peripheral surface of a pass roll 48, the transport direction is changed to a diagonally downward direction, and the positive electrode plate 1 is wound up in a roll shape, for example, in the winding section 20.

FIG. 6 (a) is the view illustrating the state where the straightening roll abuts on the positive electrode plate illustrated in FIG. 1A, and FIG. 6 (b) is a view illustrating the state where the straightening roll abuts on the positive electrode plate illustrated in FIG. 1B. Note that in the positive electrode plates 1 and 1c illustrated in FIG. 6, illustration of the protection layer 4 is omitted.

In the aforementioned positive electrode plate compression device 10, at least one of the dancer roll 30, the pass roll 32 and the tension sensor roll 34 that constitute the upstream side elongation section 14, and at least one of the tension sensor roll 36, the pass roll 38 and the dancer roll 40 that constitute the downstream side elongation section 18 are constituted of straightening rolls 50 as illustrated in FIG. 6 (a). In other words, at least one roll located in each of intervals from the speed control roll 22 and the nip roll 24 to the press rolls 16a and 16b, and from the press rolls 16a and 16b to the speed control roll 42 and the nip roll 44 can be the straightening roll 50.

The straightening roll 50 has a large diameter portion 52 and a small diameter portion 54 along the width direction of the positive electrode plate 1. In more detail, the straightening roll 50 has the small diameter portion 54 in a position facing the coated region R1 of the positive electrode plate 1, and has the large diameter portions 52 in positions facing the non-coated regions R2 of the positive electrode plate 1. The large diameter portions 52 are provided at both ends in an axial direction of the small diameter portion 54.

A material of the large diameter portion 52 of the straightening roll 50 is not particularly limited, but a metal material such as a stainless steel, and a resin material such as a monomer cast nylon, and a polytetrafluoroethylene can be preferably used.

The large diameter portions 52 of the straightening roll 50 abuts on the non-coated regions R2 at both sides in the width direction of the positive electrode plate 1. In contrast with this, the small diameter portion 54 of the straightening roll 50 is formed to be longer than the coated region R1 concerning the width direction Y, and has such a diameter that the small diameter portion 54 does not contact the positive electrode mixture layer 3 in the coated region R1 of the positive electrode plate 1. Thereby, in the upstream side elongation section 14 and the downstream side elongation section 18, only the non-coated regions R2 of the positive electrode plate 1 to which tension is applied abuts on the large diameter portions 52 of the straightening roll 50, and thereby only the metal base material portions corresponding to the non-coated regions R2 are elongated.

Subsequently, an operation of the positive electrode plate compression device 10 comprising the above described constitution will be described. The positive electrode plate 1 that is unwound from the unwinding section 12 is introduced into the upstream side elongation section 14 via the pass roll 13. While the positive electrode plate 1 is transported in the upstream side elongation section 14, tension is applied to the positive electrode plate 1 in the state contacting the large diameter portions 52 of the straightening roll 50 such as the dancer roll 30, and thereby the metal base material portions corresponding to the non-coated regions R2 are elongated (first elongation step). On the other hand, in the upstream side elongation section 14, the coated region R1 of the positive electrode plate 1 is transported in a position facing the small diameter portion 54 of the straightening roll 50, and therefore is not elongated.

Subsequently, the positive electrode plate 1 is introduced into the press section 16 from the upstream side elongation section 14, and while the positive electrode plate 1 passes between the pair of press rolls 16a and 16b, the positive electrode mixture layer 3 in the coated region R1 is compressed to a packing density of 3.4 g/cm³ or more. In the compression step, the coated region R1 of the positive electrode plate 1 is elongated in the longitudinal direction X. An elongation amount in the longitudinal direction X of the coated region R1 at this time is larger than an elongation amount in the longitudinal direction X of the non-coated region R2 in the upstream side elongation section 14.

The positive electrode plate 1 that passes through the press section 16 is introduced into the downstream side elongation section 18. In the downstream side elongation section 18, tension is applied to the positive electrode plate 1 in the state where the positive electrode plate 1 contacts the large diameter portions 52 of the straightening roll 50 such as the pass roll 38, and thereby the metal base material portions corresponding to the non-coated regions R2 are elongated (second elongation step). On the other hand, in the downstream side elongation section 18, the coated region R1 of the positive electrode plate 1 is transported in a position facing the small diameter portion 54 of the straightening roll 50, and therefore is not elongated.

Elongation amounts in the longitudinal direction X of the non-coated regions R2 in the downstream side elongation section 18 are set so that a total with the elongation amounts of the non-coated regions R2 in the upstream side elongation section 14 is substantially equal to an elongation amount in the longitudinal direction X of the coated region R1 in the press section 16. Thereby, the positive electrode plate 1 passing through the downstream side elongation section 18 is formed so that the packing density of the positive electrode mixture layer 3 is 3.4 g/cm³ or more, and the difference ΔL of the respective elongation percentages in the longitudinal direction X of the coated region R1 and the non-coated regions R2 satisfies 0 ≤ ΔL ≤ 0.3%. Further, the elongation percentage difference between the coated region R1 and the non-coated regions R2 is suppressed to 0.3% or less, whereby the warpage amounts h in the width direction Y per 1 m in the longitudinal direction X of the positive electrode plates 1a and 1b can be suppressed to 0.0 ≤ h ≤ 3.0 mm. As a result, wrinkles that are generated in the non-coated regions R2 when the positive electrode plate 1 is wound by the winding section 20 can be prevented from developing into deep wrinkles and cracks and making transport and winding impossible.

Further, in the positive electrode plate compression device 10, the upstream side elongation section 14 is provided with the carry-in section 21 that functions as the upstream side tension cutoff section, whereby tension control of the positive electrode plate 1 between the carry-in section 21 and the press section 16 can be stably performed, and the downstream side elongation section 18 is provided with the carrying-out section 41 that functions as the downstream side tension cutoff section, whereby tension control of the positive electrode plate 1 between the press section 16 and the carrying-out section 41 can be stably performed.

Note that when the non-coated region R2 is also formed in the center portion in the width direction Y as in the positive electrode plate 1c illustrated in FIG. 1B, the large diameter portion 52 may be provided in a center portion in an axial direction of the straightening roll 50 and may be caused to abut on the non-coated region R2 in the center portion of the positive electrode plate 1, as illustrated in FIG. 6 (b).

Next, a result of evaluating presence or absence of generation of wrinkles concerning the positive electrode plate for which compression treatment of the positive electrode mixture layer is performed is shown in Table 1 below.

Note that the positive electrode plate 1 before performing the compression treatment was produced as follows.

By mixing 96.7% by mass of a lithium nickel cobalt manganese composite oxide as a positive electrode active material, 2.1% by mass of acetylene black as a conductive agent, 1.2% by mass of a polyvinylidene fluoride (PVdF) as a binder, and N-methylpyrrolidone (NMP), a mixture slurry was produced. A surface of aluminum foil of a thickness of 15 µm as the metal base material 2 was coated with the mixture slurry, and dried, whereby the positive electrode mixture layers 3 (coated region R1) were formed on both surfaces of the aluminum foil. A total thickness of the aluminum foil and the positive electrode mixture layers was 190 µm. The protection layers 4 composed of alumina powder, graphite as a conductive agent, and a polyvinylidene fluoride (PVdF) as a binder were formed in the non-coated regions R2 adjacent to the coated region R1. A total thickness of the aluminum foil and the protection layers was 70 µm. The positive electrode plate 1 before performing the compression treatment was produced in this way.

**[Table 1]**

| | Positive electrode density [g/cc] | Warpage straightening technology | warpage amount h[mm] | Elongation percentage difference ΔL [%] | Wrinkle generation | Evaluation |
|---|---|---|---|---|---|---|
| Comparative example 1 | 3.0 | None | 0.0 | 0.0 | None | Good |
| Comparative example 2 | 3.1 | None | 1.0 | 0.1 | None | Good |
| Comparative example 3 | 3.2 | None | 4.0 | 0.4 | Present | Bad |
| Comparative example 4 | 3.3 | None | 5.0 | 0.4 | Present | Bad |
| Comparative example 5 | 3.4 | None | 8.0 | 0.5 | Present | Bad |
| Comparative example 6 | 3.5 | None | 10.0 | 0.6 | Present | Bad |
| Comparative example 7 | 3.6 | None | 15.0 | 0.8 | Present | Bad |
| Comparative example 8 | 3.7 | None | Unmeasurable due to breakage | 0.9 | Present | Bad |
| Comparative example 9 | 3.8 | None | Unmeasurable due to breakage | 1.1 | Present | Bad |
| Comparative example 10 | 3.1 | Prior art 1 | 0.0 | 0.0 | None | Good |
| Comparative example 11 | 3.2 | Prior art 1 | 0.0 | 0.0 | None | Good |
| Comparative example 12 | 3.3 | Prior art 1 | 1.0 | 0.1 | None | Good |
| Comparative example 13 | 3.4 | Prior art 1 | 5.0 | 0.4 | Present | Bad |
| Comparative example 14 | 3.1 | Prior art 2 | 0.0 | 0.0 | None | Good |
| Comparative example 15 | 3.2 | Prior art 2 | 0.0 | 0.0 | None | Good |
| Comparative example 16 | 3.3 | Prior art 2 | 1.0 | 0.1 | None | Good |
| Comparative example 17 | 3.4 | Prior art 2 | 5.0 | 0.4 | Present | Bad |
| Reference example 1 | 3.0 | Present embodiment | 0.0 | 0.0 | None | Good |
| Reference example 2 | 3.1 | Present embodiment | 0.0 | 0.0 | None | Good |
| Reference example 3 | 3.2 | Present embodiment | 0.0 | 0.0 | None | Good |
| Reference example 4 | 3.3 | Present embodiment | 0.0 | 0.0 | None | Good |
| Example 1 | 3.4 | Present embodiment | 0.0 | 0.0 | None | Good |
| Example 2 | 3.5 | Present embodiment | 0.0 | 0.0 | None | Good |
| Example 3 | 3.6 | Present embodiment | 0.0 | 0.0 | None | Good |
| Example 4 | 3.7 | Present embodiment | 0.0 | 0.0 | None | Good |
| Example 5 | 3.8 | Present embodiment | 3.0 | 0.3 | None | Good |

As shown in Table 1, comparative examples 1 to 9 are cases where the packing densities of the positive electrode mixture layers were changed by 0.1 g/cm³ from 3.0 g/cm³ to 3.8 g/cm³, and the positive electrode plates were produced without applying a warpage straightening technology for the positive electrode plates. As a result, when the packing densities of the positive electrode mixture layers were 3.2 g/cm³ or more, the warpage amounts h were large, and generation of wrinkles was found. In other words, the positive electrode plates were inappropriate to constitute a wound electrode assembly and a laminated electrode assembly, and the evaluations were bad.

Comparative examples 10 to 13 are the cases where the packing densities of the positive electrode mixture layers were changed by 0.1 g/cm³ from 3.1 g/cm³ to 3.4 g/cm³, and as the warpage straightening technology for the positive electrode plates, the technology disclosed in Patent Literature 1 (namely, the straightening roll was disposed only at the downstream side of the press section) was applied as prior art 1, and the positive electrode plates were produced. As a result, the warpage amounts h were small when the packing densities of the positive electrode mixture layers were 3.1 g/cm³ to 3.3 g/cm³, and generation of wrinkles was not found. However, when the packing density was 3.4 g/cm³, the warpage amount h was large, generation of wrinkles was found, and the evaluation was bad.

Comparative examples 14 to 17 are the cases where the packing densities of the positive electrode mixture layers were changed by 0.1 g/cm³ from 3.1 g/cm³ to 3.4 g/cm³, and as the warpage straightening technology for the positive electrode plates, the technology disclosed in Patent Literature 2 (namely, tension is applied to the positive electrode plate by using cylindrical rolls at the upstream side and the downstream side of the press section) is applied as prior art 2, and the positive electrode plates were produced. As a result, the warpage amounts h were small when the packing densities of the positive electrode mixture layers were 3.1 g/cm³ to 3.3 g/cm³, and generation of wrinkles was not found. However, when the packing density was 3.4 g/cm³, the warpage amount h was large, generation of wrinkles was found, and the evaluation was bad.

In contrast with the above, reference examples 1 to 4 and examples 1 to 5 are the cases where the packing densities of the positive electrode mixture layers were changed by 0.1 g/cm³ from 3.0 g/ cm³ to 3.8 g/cm³, and the positive electrode plate compression device 10 of the present embodiment was used as the warpage straightening technology for the positive electrode plate to produce the positive electrode plates. As a result, as shown in reference examples 1 to 4, the warpage amounts h were small, and generation of wrinkles was not found when the packing densities of the positive electrode mixture layers were 3.0 g/cm³ to 3.3 g/cm³ similarly to the cases of the comparative examples. Further, as shown in examples 1 to 5, even when the packing densities of the positive electrode mixture layers were 3.4 g/cm³ or more, the warpage amounts h were small, and there was no generation of wrinkles. In other words, the positive electrode plates 1 were suitable to constitute a wound electrode assembly and a laminated electrode assembly, and the evaluations were good. Thereby, it was confirmed that the method for manufacturing the positive electrode plate according to the present embodiment is particularly effective when the packing density of the positive electrode mixture layer is a high density of 3.4 g/cm³ or more.

### REFERENCE SIGNS LIST

- 1, 1a, 1b, 1c: Positive electrode plate
- 2: Metal base material
- 3: Positive electrode mixture layer
- 4: Protection layer
- 5: Wrinkle
- 10: Positive electrode plate compression device
- 12: Unwinding section
- 13, 32, 38, 48: Pass roll
- 14: Upstream side elongation section
- 16: Press section
- 16a,: 16b Press roll
- 18: Downstream side elongation section
- 20: Winding section
- 21: Carry-in section
- 22, 42: Speed control roll
- 23, 43: Motor
- 24, 44: Nip roll
- 26, 46: Pressing device
- 30, 40: Dancer roll
- 34, 36: Tension sensor roll
- 41: Carrying-out section
- 50: Straightening roll
- 52: Large diameter portion
- 54: Small diameter portion
- C: Center line
- R1: Coated region
- R2: Non-coated region
- h: Warpage amount
- t2, t3, t4: Thickness

## Claims

1. A non-aqueous electrolyte secondary battery comprising an electrode assembly constructed by causing a positive electrode plate and a negative electrode plate to face each other via a separator,
wherein the positive electrode plate includes a positive electrode mixture layer formed on a surface, a packing density of the positive electrode mixture layer is 3.4 g/cm³ or more, and a warpage amount h in a width direction orthogonal to a longitudinal direction is 0.0 ≤ h ≤ 3.0 mm per 1 m in the longitudinal direction of the positive electrode plate.

2. The non-aqueous electrolyte secondary battery according to claim 1, wherein the positive electrode mixture layer of the positive electrode plate is formed by coating a surface of a metal base material with a mixture including a positive electrode active material, the positive electrode plate includes a coated region where the positive electrode mixture layer is formed, and a non-coated region where the positive electrode mixture layer is not formed, and a difference ΔL between respective elongation percentages in a longitudinal direction of the coated region and the non-coated region by compression treatment and elongation treatment during manufacture of the positive electrode plate is 0 ≤ ΔL ≤ 0.3%.

3. The non-aqueous electrolyte secondary battery according to claim 1 or 2, wherein the positive electrode mixture layer includes Ni-containing composite oxide particles as a positive electrode active material, and a ratio of Ni to a total number of moles of metal elements excluding Li in the Ni-containing composite oxide particles is 30 mol% or more.

4. A method for manufacturing a positive electrode plate used in a non-aqueous electrolyte secondary battery, in which a positive electrode mixture layer by coating a surface of a long band-shaped metal base material with a mixture including a positive electrode active material along a longitudinal direction, and a non-coated region that is not coated with the positive electrode mixture are continuously formed, comprising:
a compression step of compressing the positive electrode mixture layer of the positive electrode plate;
an upstream tension giving step of giving tension to the positive electrode plate in an interval between the compression step and two rolls, by sandwiching and passing the positive electrode plate between the two rolls, before the compression step;
a first elongation step of elongating a metal base material portion corresponding to the non-coated region where the positive electrode mixture layer is not formed in the positive electrode plate in an interval of the upstream tension giving step;
a downstream tension giving step of giving tension to the positive electrode plate in an interval between the compression step and two rolls by sandwiching and passing the positive electrode plate between the two rolls, after the compression step; and
a second elongation step of elongating the metal base material portion corresponding to the non-coated region, in an interval of the downstream tension giving step,
wherein in the first and second elongation steps, the metal base material portion is elongated by causing a large diameter portion of a straightening roll including the large diameter portion and a small diameter portion along a width direction orthogonal to a longitudinal direction of the positive electrode plate to abut on the metal base material portion corresponding to the non-coated region, and applying tension to the metal base material portion.
